# EUROPEAN PATENT APPLICATION

(11) **EP 1 182 840 A1**
(43) Date of publication of application: **27.02.2002**
(21) Application number: 00118438.1
(22) Date of filing: 24.08.2000
(51) Int. Cl.: H04L 29/06, H04Q 7/22

(54) **Method for a connection through a core network**

(71) Applicant: TELEFONAKTIEBOLAGET LM ERICSSON (publ), 126 25 Stockholm (SE)
(72) Inventor: Hodges, Phil, 52062 Aachen (DE)
(74) Representative: Tonscheidt, Andreas

(57) **Abstract**

In a method for the establishment of a connection between a first node (RNC1) and a second node (RNC2), both are connectable to a core network which comprises interconnected core network nodes (CN1, CN2). The first node (RNC1) signals a call request to a first core network node (CN1). If the first node is an access node, it sends an initialization according to a framing protocol, wherein a set of parameters for the framing of information sent over the interface between the first access node (RNC1) and the first core network node (CN1). If the first node is no access node, a first control server (MSC1) defines said set of parameters. The set of parameters is transmitted to the first core network node (CN1) and the first core network node (CN1) stores the parameter set. The first core network node (CN1) initializes the connection (Co) to a further core network node according to said protocol and the further core network node stores the parameter set. The initialization of the connection (Co) to and the storing of parameters in further core network nodes is performed stepwise until a final core network node (CN2) is reached which is connectable to the second access node (RNC2). The final core network node (CN2) initializes the connection (Co) to the second access node (RNC2) according to said protocol and the second access node (RNC2) stores the parameter set. A core network node and a program unit embodying the invention are also described.

## Description

### Technical field of the invention

The present invention relates to a method according to the preamble of claim 1. Devices and software programs embodying the invention are also described.

### Background

Communication networks can be subdivided into core networks and access networks, the latter providing access to user equipment, for example a wireless access for mobile user equipment to a radio access network. Core networks interconnect access networks and optionally further networks, e.g. the Internet. In the UMTS architecture, an access network can be controlled by an RNC (radio network controller) which is connected to the core network and provides access to the core network, i.e. serves as access node. In 3GPP (3^{rd} Generation Partnership Project) Technical Specification 3G TS 25.415 V3.2.0, the interface between the access node and a node in the core network is denoted as lu interface. Over the lu interface, connections can be established according to the lu user plane protocol.

RFCIs (radio access bearer subflow combination indicators) are indicators to sets of parameters which are generated by an RNC in radio access bearer assignments. They indicate which service data unit formats are valid, for example for use in speech frames or in rate control requests received from the core network, and how they are formatted. RFCIs determine the codec mode, especially allowed rates. When a transcoder is inserted into a connection, it receives data frames, e.g. lu frames, and relates the assigned RFCI to a codec mode in order to decode the frames. In the same way, it must indicate the RFCI when it sends an encoded frame.

The lu interface as specified in 3GPP Technical Specification 3G TS 25.415 terminates in a core network node, for example in an MSC or in a media gateway controlled by an MSC server, according to the architecture of the core network. In a core network node, the content of data sent over a connection can be changed. Especially, the payload or speech coding can be adapted, for example due to the intervention of supplementary services like DTMF (Dual Tone Multifrequency) tone insertion, supplementary services tone insertion, messages or conference connections of user equipment.

For connections between nodes within the core network, different protocols are possible. Beside the lu user plane protocol, I.366.2 is a protocol defined by the ITU (International Telecommunication Union) as service specific convergence sublayer (SSCS) used on AAL2 (Asynchronous Transfer Mode Adaptation Layer Type 2) for carrying service specific payloads. Especially, it is the framing protocol proposed to be used for carrying compressed voice. This requires the core network node to terminate the lu interface and to establish an AAL2 connection with the required SSCS for the selected speech coding type. A further framing protocol is RTP (Real Time Protocol) which can be carried on an IP transport layer in the core network for transmission of compressed voice of a specified encoding.

A problem with both RTP and I.366.2 is that they are application dependent and transport layer dependant. If the coding type changes during a connection, a new AAL2 connection or modification must be made with the new SSCS profile. For an IP network, a new RTP profile must be used. This requires unnecessary overhead to carry the profiles with the payload. A further problem with SSCS or RTP is that both are service specific. The protocols require modifications in standardization and implementation for every new service.

In contrast to this, the lu user plane protocol is defined service independent. An lu interface can be connected between two access nodes, e.g. by using BICC (Bearer Independent Call Control) messages to pass the bearer address used in a first access node from a server, e.g. an MSC, controlling it to the server controlling the other access node. In this case, it is disadvantageous that there is no control of the user plane. For example, when a handover is necessary or a supplementary service invocation occurs, the lu connection has to be cancelled and a new lu connection must be established which is very inefficient and would degrade the service level. However, for most of the time in a connection, supplementary services or other functions within the connection path are not necessary and hence a virtually direct and transparent connection between access nodes or an access node and a transcoder is advantageous.

The other described framing protocols do not carry the lu user plane parameters. Transcoders are necessary to terminate the lu connection and need to receive the parameters sent by the lu user plane initialization procedure (RFCIs). If another of the above-described framing protocols is used in the core network, the lu user plane protocol is terminated at the first core network node in the connection, e.g. a media gateway. The payload content is then mapped to the other framing protocol. Furthermore, the RFCI initialization must be carried by the other framing protocol and possibly mapped to the actual mode as the framing is codec type specific. At the final core network node in the connection, a transcoder to terminate the lu connection to the access node must then be initialized and the payload content must be mapped back to the lu user plane protocol which requires sufficient processing capacity.

It is also conceivable that parameter sets like RFCIs are transferred from access nodes by out-band procedures, i.e. the core network nodes are provided with parameter sets by a vertical control protocol from servers controlling them. This architecture is customary in a telecommunication system with separate user plane comprising the core network nodes and a control plane with the servers. Between the servers, the parameter sets can be transferred via the horizontal bearer independent call control (BICC) protocol. The parameter sets can then be transferred to the core network nodes and stored during connection set-up or are only sent when needed to modify a connection. Although this solution allows establishing an lu user plane connection transparently through the core network nodes, it has the disadvantage that it requires a high amount of signaling traffic.

In the case, that inband signalling is used, two further problems can occur. Firstly, that parameter sets sent by a first RNC and a second RNC might by crossing. This happens for example, when a second RNC sends a parameter set before it receives a parameter set from the first RNC.

Secondly, an RNC might start initializations without being requested by a MSC, a so-called unsolicited initiation. To recognise said initializations, core network nodes have to monitor the user plane they transport. As this consumes processor capacity in said core network nodes, this is not always favored.

### Summary and description of the invention

It is the object of the present invention to obviate the above disadvantages and provide a simple method for the establishment of an efficient connection through a network, wherein the connection can easily be controlled.

According to the invention, the method described in claim 1 is performed. Furthermore, the invention is embodied in a node as described in claim 16 and a program unit as described in claim 19. Advantageous embodiments are described in the dependent claims.

The proposed method establishes a connection between a first access node and a second access node which are connectable over a core network. An access node can also be a node connecting a further communication network to the core network or a core network node terminating the connection in a transcoder. The core network comprises interconnected core network nodes, for example media gateways or customary mobile services switching centers (MSC). The first access node initializes the connection to a first core network node according to a framing protocol. If the access node belongs to a different network, the initialisation can be performed via a core network control node. During the initialization, a set of parameters for the framing of information sent over the interface between the first access node and the first core network node is transmitted to the first core network node. The first core network node stores the parameter set in a memory.

The first core network node either decides or receives a decision from a core network control node or an access node whether an indicator is to be set, that transparent lu UP transmission is permitted. An indicator is set to "transparent transmission of lu UP is permitted". This has the effect, that the access nodes are not permitted to perform an unsolicited initialisation and that respectively the core network control nodes or core network nodes can decide to remove the monitoring of lu UP for initialisation messages. The parameter indicating the setting of the indicator is sent to the access nodes during RAB assignment.

In the case that the indicator isset, the lu UP handling in the core network nodes can be switched in or switched out for example by core network control nodes. It is then also required that no unsolicited lu initialisation is received by the core network nodes. This is acceptable because the core network control node controls the RAB Assignment and the edge core network nodes, for example the first and the final control node. It is the edge core network nodes that need their lu UP function switched in prior to a RAB assignment modification.

The control of this procedure can be initiated by the core network control nodes at either end of the call, independently. A new procedure in the RAB Assignment from the core network control node to the RNC indicates that the RNC should maintain the lu UP initialisation until instructed to change by a further RAB Assignment or Relocation Request. The RNC can send the indicator, for example as a new field in the IU UP initialisation PDU. This enables other core network nodes in the call path to remove their lu UP termination and monitoring functions.

The first core network node stores the indicator in its memory and then initializes the connection to a further core network node according to said protocol and the further core network node also stores the parameter set and the indicator. In this way, a stepwise initialization of the connection to further core network nodes and storing of parameters and the indicator in the further core network nodes is performed until a final core network node is reached which is connectable to the second access node. It is possible that the second core network node is already the final core network node. The final core network node initializes the connection to the second access node according to said framing protocol and the second access node stores the parameter set and the indicator.

The proposed method is simple and requires a low processing effort in the nodes because no mapping between different framing protocols is necessary. In a simple implementation, the core network nodes transfer the frames without evaluation of the content. However, every core network node can terminate the framing protocol, establish further connections or connections with different parameters and access the data in the frames using the stored parameters. Especially, the connection can be controlled or adapted in every node with low delay and independent of other nodes in the connection. Because only one protocol is used in a connection, there are no problems of adaptation and a fast evolution of services is possible. A virtual transparent connection between access nodes and a transcoder, respectively between access nodes is possible. Preferably, the described method is performed in a communication network.

The proposed method allows, however, also to change the framing protocol between two nodes in the core network (e.g. between CN1 and CN2 by use of RTP or I.366.2) wherever required and where these other framing protocols are defined for the service in question, because the framing protocol is initialized and can be terminated in each of the nodes. This requires more processing within these network nodes and is not as flexible as the preferred method, but it allows the intervention of supplementary services within each node, as described below.

In a preferred embodiment, the core network nodes acknowledge the initialization to the preceding node, i.e. a core network node or an access node. In this way, the initialization is terminated for the preceding node. The acknowledgement is preferably sent before or during the initialization of the connection to a further core network node.

A preferable framing protocol is the lu protocol which can be used inside a core network according to 3GPP specifications to carry payload between core network nodes and to an edge of the network where, for example, the connection is terminated in a transcoder or in a terminating access node, e.g. an RNC. The lu user plane protocol is initialized in every node in the connection that may add a service to the payload.

An advantageous core network node in the connection can insert a function unit into the connection, e.g. break the transcoder free operation of the connection by inserting a transcoder or by inserting a function unit providing a supplementary service. An insertion of supplementary services can occur inside media gateways without an influence on other nodes and links in the connection and is in this way fast and simple to handle.

A preferable core network node can break the connection and initialize a connection segment to a different core network node or access node according to said protocol using the same parameter set for the connection segment as for the former connection. In this way, for example a handover of a connection between different access nodes can be performed if the connection is terminated by a mobile user equipment moving in a communication system or the connection can be redirected.

The connection between two core network nodes can be established via one or several switches, i.e. nodes in the core network which do not store connection parameters and can not change connection parameters.

If a core network node is adapted to establish connections according to different framing protocols, it preferably checks the framing protocol defined in a request to initialize a connection and selects said framing protocol for the initialization of the connection to a further node. In this way, a mapping between different protocols is avoided while several protocols can be used.

A core network node according to the invention, e.g. an MSC or a media gateway, is interconnected with further core network nodes. It has an interface for receiving an initialization request from an access node or a further core network node to establish a connection according to a framing protocol. A processing system is adapted to extract a set of parameters for the framing protocol from the request and initialize the connection to a further core network node or an access node according to said protocol. The processing system determines an indicator for the permission of transparent lu UP transmission after connection establishment. The determination can be performed by extracting the indicator from the initialisation request, by receiving it from a core network control node, or by decision. The extracted parameter set and the indicator are stored in a memory. The indicator is evaluated for the monitoring of the payload. The core network node can preferably perform any steps of the above described methods relating to the core network node.

In the invention, a transparent transmission through core network nodes is preferably selected. In a non-transparent mode, a core network node transmitting the user plane monitors the user plane for initialisation messages.

In the transparent mode, unsolicited lu UP (lu user plane) initialization, that is an lu UP initialization starting without involving an MSC or MSC server, from an RNC during an active call is not permitted. The RAB (radio access bearer) assignment contains a new parameter which indicates if the RNC is allowed to perform unsolicited lu UP initializations or not. If the MSC Server has successfully negotiated a TrFO (transcoder free operation) call it can then decide if it wants the TrFO connection to be transparent or not. If the option is to support transparent lu UP connections then it sets this parameter in the RAB Assignment. The RNC then sets the new indicator in the lu UP initialization indicating this. This means that the RNC does not re-configure its set of parameter e.g. RFC's and TFC's mid-call without receiving a new RAB Assignment or Relocation Request from the MSC.

In the case where an SRNC (serving RNC) receives an lu frame indicating that an initialization procedure is active at the other end of the lu UP, the RNC changes its RFCI set to match the set indicated by the peer. That is, both RFCI sets, i.e. the set for uplink and the set for downlink, match and are derived by the peer.

If the transparent mode is not supported by a core network node, the user plane has to be monitored for lu UP initialization and mapping of RFCI allocation from the RNC interacting with said core network node, to any initializations received from a far end RNC is to be performed.

A program unit according to the invention can be stored on a data carrier or be directly loadable into a core network node. The program unit comprises code for performing the steps of receiving a request to initialize a connection according to a framing protocol, extracting a set of parameters for the framing of information according to said protocol, storing the parameter set, deciding or receiving a decision whether an indicator for the permission of transparent transmission of lu UP is permitted, initializing the connection to a further core network node or an access node according to said protocol, and forwarding the indicator. It can preferably perform any steps of the above methods relating to the core network node.

The foregoing and other objects, features and advantages of the present invention will become more apparent in the following detailed description of preferred embodiments as illustrated in the accompanying drawings.

### Brief description of the drawings

Fig. 1 shows a basic connection establishment according to the invention.
Fig. 2 shows a connection establishment between two access nodes.
Fig. 3 shows a redirection of a connection between two access nodes.
Fig. 4 shows a connection with an inserted pair of transcoders.
Fig. 5 shows a basic connection establishment according to the invention.
Fig. 6a shows a core network node transferring lu UP in a non-transparent way.
Fig. 6b shows a core network node transferring lu UP in a transparent way.

### Detailed description of preferred embodiments of the invention

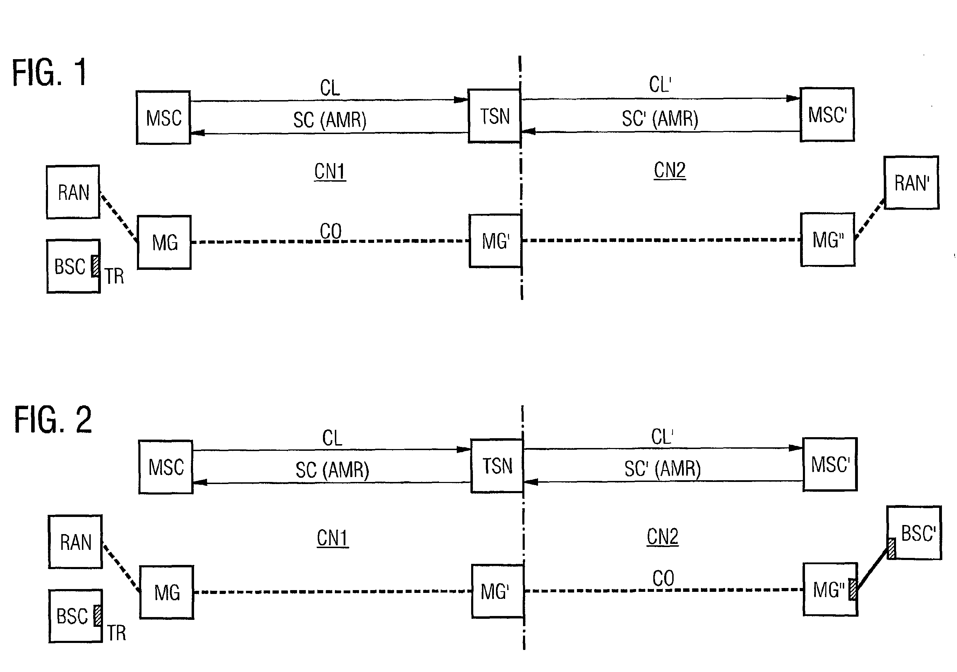

In figure 1 the first steps of the initialization of a connection according to the invention is depicted. The connection is established according to the lu user plane protocol, which is terminated in every core network node CN that may require modifying the user connection, for example for a supplementary service intervention. From a first access node RNC1 a message In1 to initialize a connection is sent to a first core network node CN1. In the example, the message In1 is an lu initialize packet data unit. A processing system of the first core network node CN1 extracts a set of parameters, especially RFCIs, from the message In1 and stores them in a memory MEM1. The first core network node CN1 sends an acknowledgement Ack1 of the message In1 to the first access node RNC1 and creates a further message In2 comprising the parameter set. The core network node CN1 decides to allow transparent lu UP transmission after call establishment. An indicator indicating the transparent transmission of lu UP is added to the parameter set or sent together with it. This can be implemented by a modification of the 3GPP TS 25.415 standard, allowing the addition of said indicator. Message In2 is sent to a further core network node CN2 which also extracts the parameter set and said indicator, stores it in a memory MEM2 and sends an acknowledgement Ack2 back to the first core network node. By repeating the initialization stepwise for all nodes in the connection, every node has control of the lu user plane and service data unit formats passed in the initialization packet data unit.

Parameter sets, especially RFCIs, are generated according to customary specifications for communication networks by the access nodes RNC1, RNC2 as soon as a request to set up a connection is received. For a transcoder free operation of a connection, there are generally two sets or RFCIs, being initialized from each access node to the other. As shown in figure 2, the second access node RNC2 waits in this case for the initialization from the first access node RNC1 sent stepwise via messages In1, In2, In3 acknowledged by corresponding acknowledgements Ack1, Ack2, Ack3. In the same way, the connection is then initialized backwards with the same set of parameters via messages In4, In5, In6 acknowledged by corresponding acknowledgements Ack4, Ack5, Ack6.

In a preferred embodiment of the invention, no initialization in backward direction is performed if the indicator for a transparent lu UP transmission is set. As the same parameter set is used in either direction, an initialization in backward direction is redundant. To enable the usage of the same parameter set in uplink and downlink between the final core network node CN2 and the second access node RNC2, the second access network node has to adapt both parameter sets, for uplink and downlink connection at initialization.

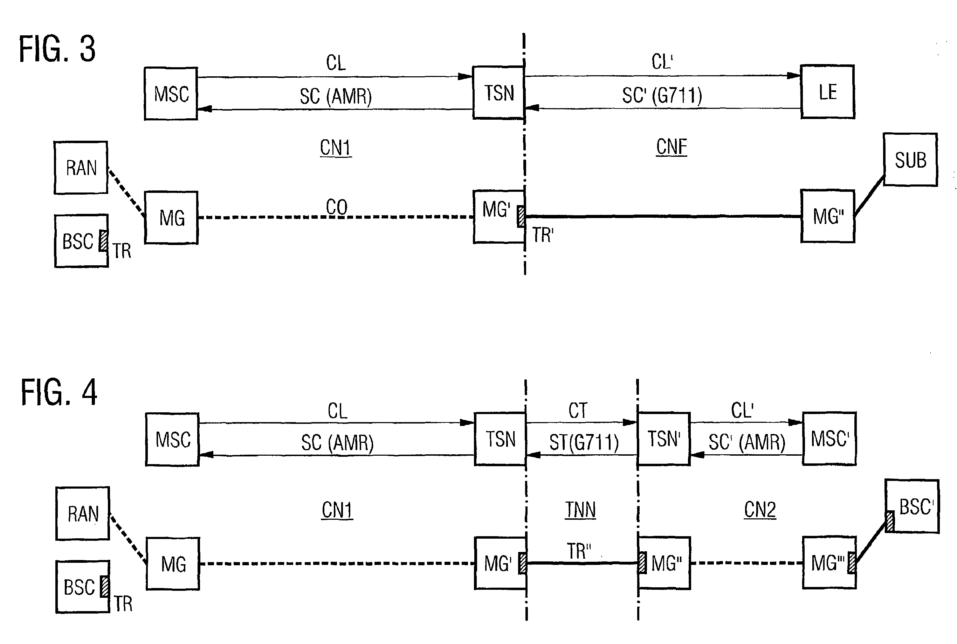

Figure 3 shows an example of a redirection of an established connection Co due to a relocation of the serving access node terminating one end of the connection Co as indicated by arrow Ar. A relocation can for example be necessary when a user moves in the coverage area of a mobile communications network and a handover is performed between radio base stations controlled by different controllers serving also as access nodes RNC2, RNC3. A new radio access bearer is established by access node RNC3 to the core network node CN2, e.g. a media gateway, by performing a new lu user plane initialization with a message In which is acknowledged by acknowledgement Ack the core network node CN2. The parameters initialized by the first access node RNC1 for the original connection are read from a memory in core network node CN2 and transmitted in initialization message In' with corresponding acknowledgement Ack' to the new access node RNC3. The new access node RNC3 uses the set of parameters for both uplink and downlink connection to the network. The other nodes taking part in the connection are left unaffected. In this way, a new connection segment Co' can be established in a fast and simple way.

In figure 4, a connection Co between two access nodes RNC1, RNC2 over core network nodes CN1, CN2 is shown with a pair of transcoders TR inserted into the connection. The insertion can be performed at any core network node. The insertion can be performed for example into an ongoing connection to provide a supplementary service or already during the establishment of connection, Co if required by incompatible parameter sets sent by the access nodes RNC1, RNC2. Preferably, the insertion of a transcoder TR is handled within a core network node CN1. Because the necessary parameters for terminating the lu user plane protocol are stored in the core network node CN1, they can be provided to the transcoder TR fast and efficiently. Therefore, transcoder TR can be switched into connection Co with minimum delay in a primed state. Consequently, speech and data frames can be received and transmitted coherently during the insertion improving the in this period connection quality.

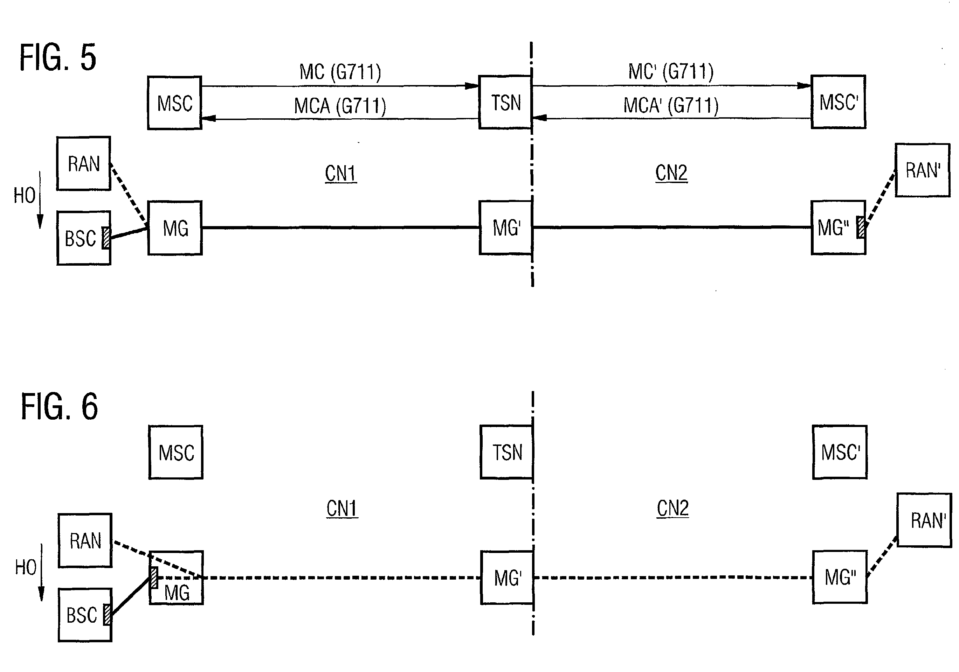

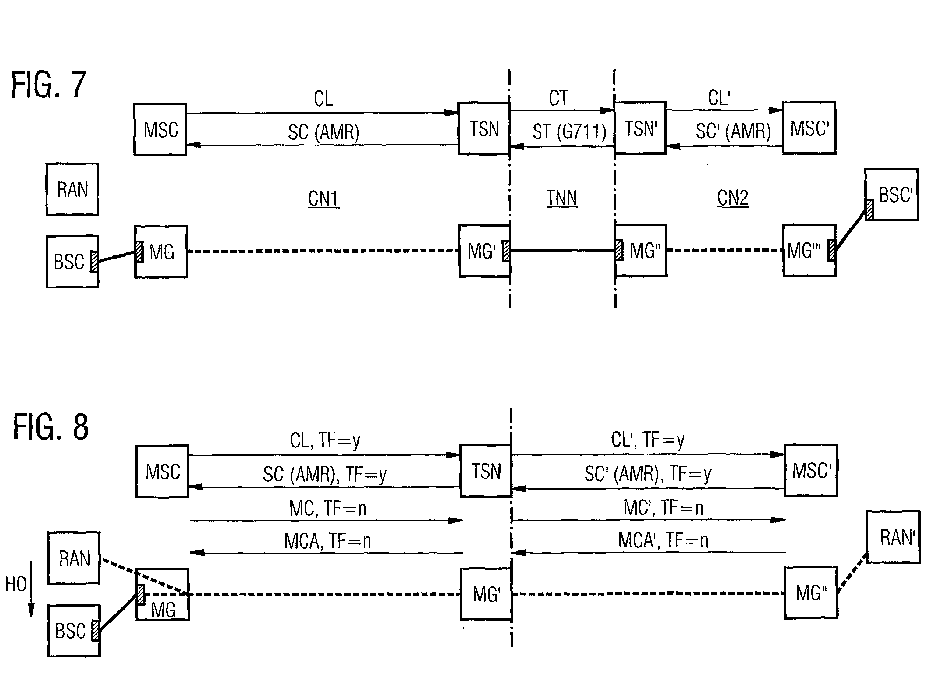

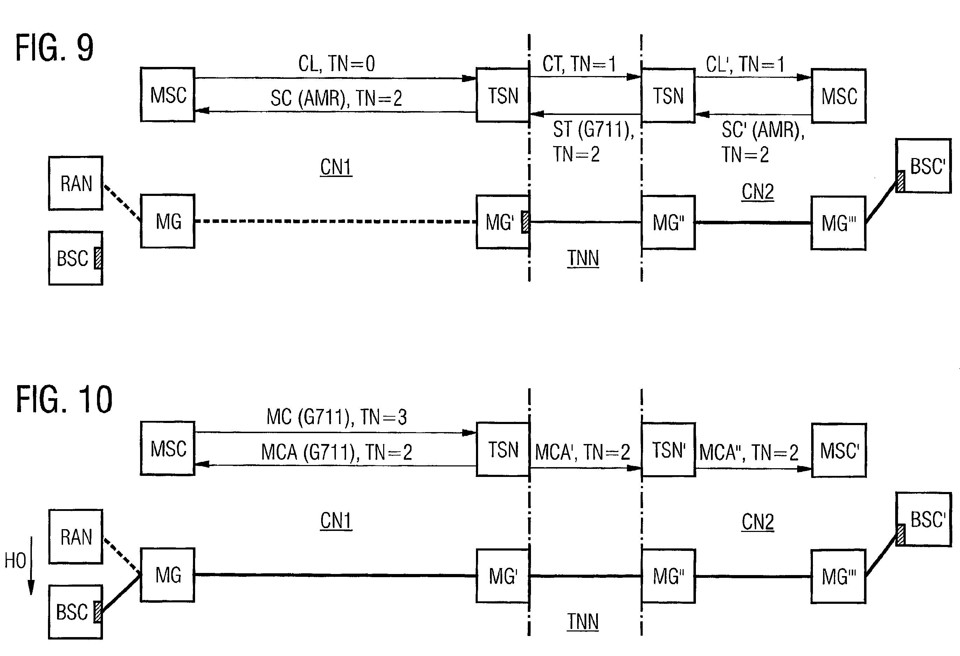

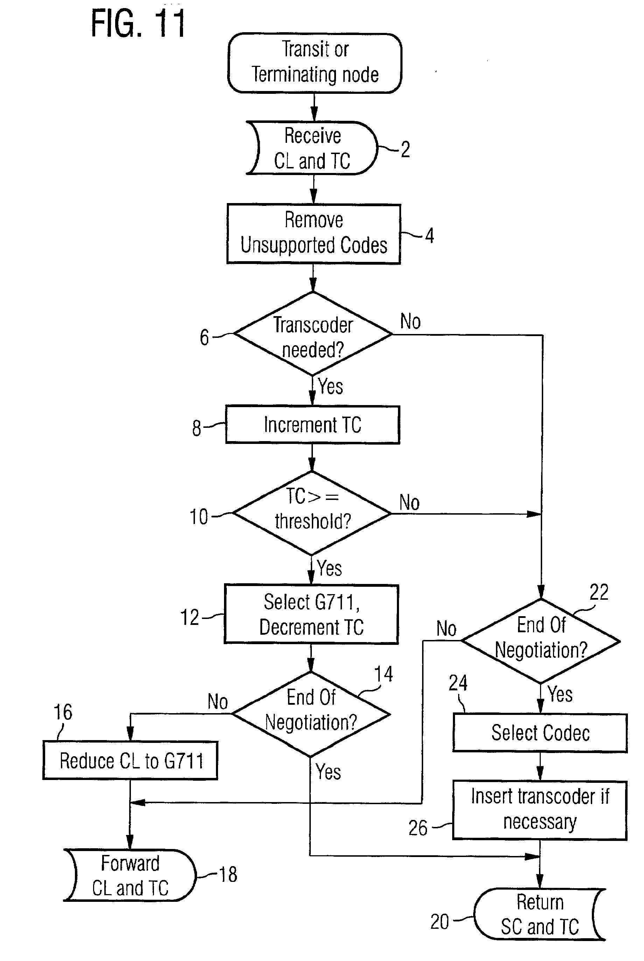

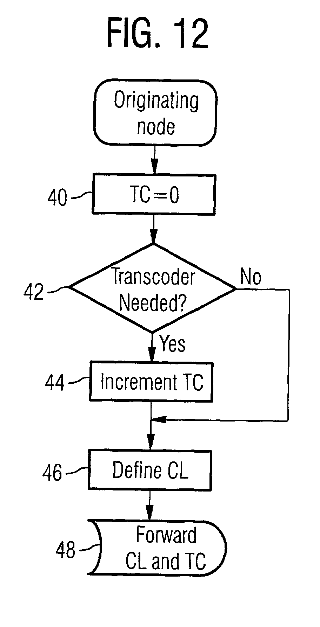

In figure 5 a connection is set up between an access node from a further network and a network controlled according to the invention. A call request 51 is received in a core network control node GMSC. The core network control node GMSC decides to set an indicator that the transparent lu UP transmission is permitted. It defines a set of parameter and sends the set of parameter, or an identification of said set as well as the indicator to a first core network node CN1 in a message 52.

In a further embodiment of the invention, the set of parameters and an acknowledgement are exchanged in a message sequence InAck between the access node RNC1 and the first core network node CN1. In this case, only the decision to set the indicator is sent by the core network control node GMSC to the core network node.

In another embodiment of the invention, also the decision to set an indicator is taken by an access node, or the parameter indicating said decision is sent by the core network control node GMSC to an access node. In those cases message 52 is not sent.

Independent from the source of the set of parameters or indicator, after the reception of said parameter set and the indicator, the first core network node CN1 continues the connection establishment as described in figure 1. The initialization message and the according acknowledgement are depicted as the message sequences InAck' and InAck".

The difference between the non-transparent and the transparent transmission of lu UP is described in figures 6a and 6b using an lu UP protocol as an example.

Figure 6a shows two core network nodes, monitoring the lu UP here referred to as lu SDUs-payload for initialization messages referred as IU PDU Type 14 while transferring it. In both nodes, the currently valid RFCIs are stored.

Figure 6b shows the same core network nodes transferring lu UP transparently. The payload is not monitored, RFCIs are stored. In that case, the stored RFCI values will be used for the new connection segment. As the core network nodes do not monitor the lu UP for initialization messages, no unsolicited initialization must be sent to them.

The above embodiments admirably achieve the objects of the invention. However, it will be appreciated that departures can be made by those skilled in the art without departing from the scope of the invention, which is, limited only by the claims.

## Claims

1. Method for the establishment of a connection between a first node (RNC1) and a second node (RNC2) which are connectable to a core network, wherein the core network comprises interconnected core network nodes (CN1, CN2), **characterized in that**
the first core network node (CN1) receives a set of parameters for the framing of information sent over the interface between the first access node (RNC1) and a first core network node (CN1) for a connection (Co),
the first core network node (CN1) stores the parameter set,
a decision is taken to set an indicator that transparent transmission is performed after call establishment,
the first core network node (CN1) initializes the connection (Co) to a further core network node according to said protocol, including said indicator,
the further core network node stores the parameter set including said indicator, stepwise initialization of the connection (Co) to and storing of parameters and
the indicator in further core network nodes until a final core network node (CN2) is reached which is connectable to the second node (RNC2),
the final core network node (CN2) initializes the connection (Co) to the second node (RNC2) according to said protocol and the second access node (RNC2) stores the parameter set including said indicator.

2. Method according to claim 1, wherein the decision to set an indicator is taken by a core network control node (MSC1) controlling the first core network node (CN1).

3. Method according to claim 1, wherein the decision to set an indicator is taken by the first core network node (CN1).

4. Method according to claim 1, wherein the decision to set an indicator is taken by an access node (RNC1, RNC2).

5. Method according to any preceding claim, wherein a decision to monitor payload for initialisation messages is taken by a core network control node and signalled to a core network node.

6. Method according to any preceding claim, wherein a core network control node decides to set a parameter that unsolicited lu initialisations are not permitted and sends said parameter to an access node.

7. Method according to any preceding claim, wherein a core network node (CN1, CN2) acknowledges the initialization to a preceding node (CN1, CN2, RNC1).

8. Method according to any preceding claim, wherein the framing protocol is the lu protocol.

9. Method according to any preceding claim, wherein a core network node (CN1, CN2) in the connection (Co) inserts a function unit into the connection (Co).

10. Method according to any preceding claim, wherein a core network node (CN1, CN2) in the connection (Co) breaks the connection (Co) and initializes a connection segment (Co') to a different core network node or access node (RNC3) according to said protocol, using the same parameter set for the connection segment (Co') as for the connection (Co).

11. Method according to any preceding claim, wherein the second access node (RNC2) initializes a reverse connection (Co) to the final core network node (CN2) according to the protocol, wherein a second set of parameters for the framing of information is transmitted.

12. Method according to claim 10, wherein both sets of parameters differ and a core network node (CN1, CN2) inserts a pair of transcoders (TR) into the connection (Co).

13. Method according to claim 10, wherein both sets of parameters differ and the final core network node (CN2) sends a message to a control server (MSC2) for initiating a modification of connection (Co) parameters by the final access node (RNC2), the final access node (RNC2) changing both the parameter sets for uplink and for downlink transmissions to the final core network node (CN2).

14. Method according to any preceding claim, wherein the connection (Co) between two core network nodes (CN1, CN2) is established via a switch.

15. Method according to any preceding claim, wherein a core network node (CN1, CN2) is adapted to establish connections according to different framing protocols, checks the framing protocol defined in a request to initialize a connection (Co) and selects said framing protocol for the initialization of the connection (Co) to a further node (CN1, CN2, RNC1, RNC2).

16. Core network node in a communication network, wherein said node is interconnected with further core network nodes (CN1, CN2), and comprises
- an interface for receiving an initialization request from a node (RNC1, CN1, CN2) to establish a connection (Co) according to a framing protocol,
- a processing system to extract a set of parameters for the framing protocol from the request and determine an indicator for the permission of transparent lu UP transmission after connection establishment, and initialize the connection (Co) to a further node (CN1, CN2,RNC1, RNC2) according to said protocol and monitoring the transmission according to the indicator,
- and a memory (MEM) for storing the extracted parameter set and said indicator.

17. Core network node according to claim 16, wherein the core network node is adapted to perform a decision to set said indicator.

18. Core network node according to claim 16 or 17, wherein the core network node is adapted to perform a method according to any of the claims 2 to 15.

19. Program unit on a data carrier or loadable into a core network node, said program unit comprising code for performing the steps of
receiving a request to initialize a connection (Co) according to a framing protocol,
extracting a set of parameters for the framing of information according to said protocol,
storing the parameter set,
deciding or receiving a decision that an indicator is set, permitting transparent transmission of lu user plane after connection establishment,
and initializing the connection (Co) to a further core network node (CN1, CN2) or an access node (RNC1, RNC2) according to said protocol and forwarding the indicator.

20. Program unit according to claim 19, wherein said program unit comprises code for performing any steps of a method according to any of the claims 2 to 15.
